Europäisches Patentamt

European Patent Office

Office européen des brevets

(11) Publication number: **0 136 092**
**B1**

# EUROPEAN PATENT SPECIFICATION

(45) Date of publication of patent specification: **09.12.87**

(21) Application number: **84305855.3**

(22) Date of filing: **28.08.84**

(51) Int. Cl.⁴: **B 65 B 19/28**, B 07 C 5/34

(54) **Apparatus for inspecting cigarette bundles.**

(30) Priority: **31.08.83 JP 160941/83**

(43) Date of publication of application:
**03.04.85 Bulletin 85/14**

(45) Publication of the grant of the patent:
**09.12.87 Bulletin 87/50**

(84) Designated Contracting States:
**DE GB IT**

(56) References cited:
**GB-A-2 094 129**
**US-A-4 266 674**

(73) Proprietor: **Tokyo Automatic Machinery Works Limited**
**10-7 Iwamotocho 3-chome**
**Chiyoda-ku Tokyo (JP)**
(73) Proprietor: **JAPAN TOBACCO INC.**
**2-1 Toranomon 2-chome Minato-ku**
**Tokyo 105 (JP)**

(72) Inventor: **Hisashi, Kuga**
**416-19 Edogawadaihigashi 4-chome**
**Nagareyama-shim Chiba-kem (JP)**
Inventor: **Chikara, Sasaki**
**1-203 Asahicho 5-chome**
**Senju Adachi-ku Tokyo (JP)**

(74) Representative: **Denmark, James**
**c/o Bailey Walsh & Co. 5 York Place**
**Leeds LS1 2SD Yorkshire (GB)**

## Description

Background of the invention
1. Field of the invention

The present invention relates to an apparatus for inspecting and checking cigarette bundles in order to detect defects therein such as absence of tobacco at the tops of cigarettes, absence of filters of cigarettes and absence of whole cigarettes from the bundles.

2. Background of the invention

In order to check cigarette bundles, it has been proposed to use sensing means which sense cigarette bundles whilst held by respective buckets of a bucket conveyor. Such sensing means is proposed in Japanese Examined Utility Model Publication No. 58-5517 by the applicant of this application, and also in British Patent Specification GB—A—2094129. These publications disclose a photosensitive device consisting of light emitters and light receivers provided at one or both sides of each layer of cigarettes of each bundle housed in the buckets. The light receivers may be photoelectric tubes. The photo tubes sense defects in cigarettes by detecting the strength of reflected light received from the emitters after being reflected from the cigarette ends, and issue a defect input signal where a defect is detected. The prior art portion of claim 1 is based on the disclosure of the above cited GB document.

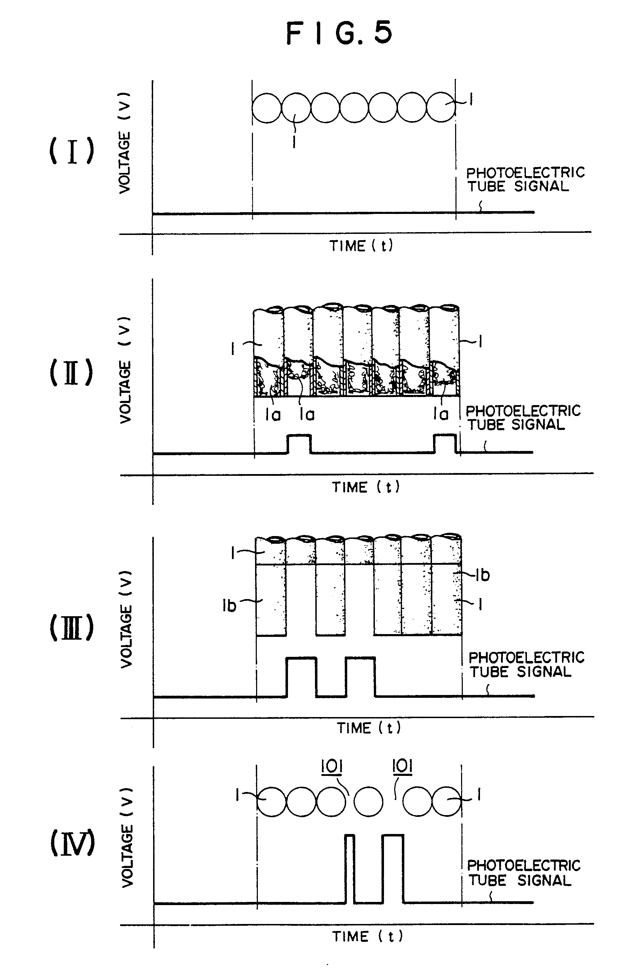

For example, output signals issued from the photoelectric tubes arranged to check a 7 cigarette layer of cigarettes housed in a bucket is shown in charts (i) through (iv) of Fig. 5.

In Fig. 5, chart (i) shows that the 7 cigarette layer has no defects and is in normal condition. In this instance, the tube output signal remains at a constant voltage level throughout the time the bucket passes.

Chart (ii) shows the state where the tips $1a$, $1a$ of two cigarettes are short of tobacco, e.g. the tobacco may have dropped out. The signal issued from the photoelectric tube is a constant voltage except in register with the deficient cigarettes where there are rectangular pulses indicating defects. These pulses arise because the light has to travel a greater distance before being reflected back to the receivers.

Chart (iii) shows a state where two cigarettes have no filter $1b$. The signal of the tube as shown is similar to chart (ii). However, since the filter is usually longer than the missing tobacco content $1a$, the voltage pulse shown in this chart is higher in level than that of the chart (ii) as the light has to travel an even greater distance before being reflected back to the receiver.

Chart (iv) shows a state where a cigarette 1 is missing creating a space in the layer and where a neighbouring cigarette has moved partially into the space. Since the spaces present no resistance to the signal, the voltage pulses are highest of all conditions as the light may not be reflected back to the receivers. In the drawing, reference 101 indicates the spaces between cigarettes.

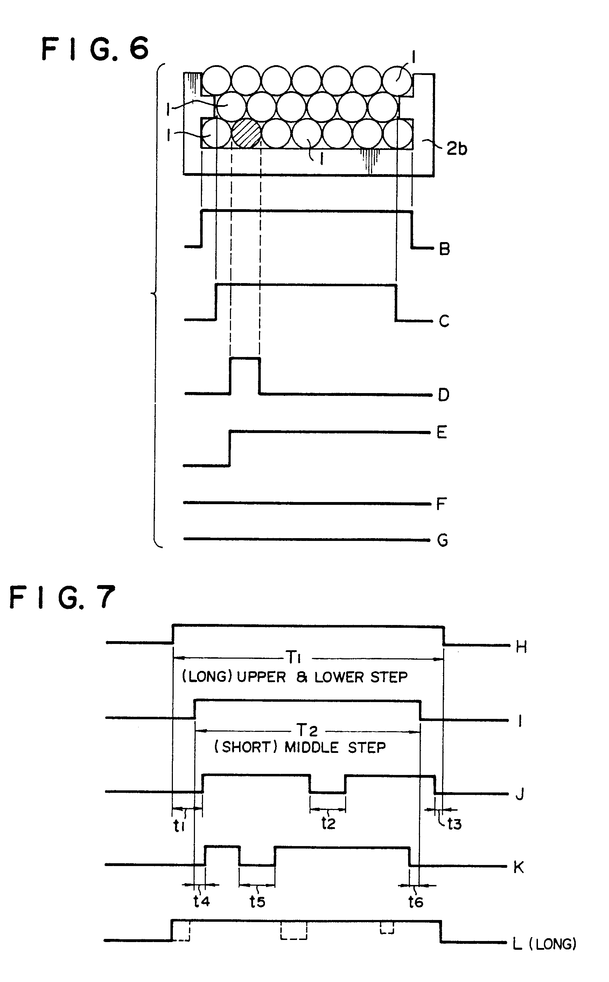

The example shown in Fig. 6 illustrates how the conventional sensing means is used for detecting the signal issued from the photoelectric tube for detecting defects in cigarette bundles.

In Fig. 6, three layers of cigarettes 1 consisting of 7, 6 and 7 cigarettes respectively, are arranged in a bucket $2b$. Signals B and C show "gate times" which comprise respectively the times taken by the top and bottom layers of cigarettes on the one hand and the middle layer of cigarettes on the other hand to pass a point relative to which the bucket $2b$ moves in the direction of arrow X. Only when a defect in a cigarette or the bundle such as defect D is found within the times shown by B and C, is final output signal E issued. The final signal E is used as signal for eliminating a bundle containing a defect, or for stopping the bundle inserting and conveying operation.

When no defect is detected, the defect input signal remains 0 volts (state F) and no defect input signal is generated in the gate signal B or C. The final output signal G is retained 0 volts level and thus no input signal for eliminating a defected cigarette bundle or for stopping the operation, is generated.

However, it should be noted that the bucket $2b$ is dimensioned so that the cigarettes 1 although not defective when inserted and/or conveyed may have spaces therebetween. The cigarettes in the bucket move to counter- or moving-direction depending on the intermittent movement of the bucket, and consequently, irregular clearance spaces shown in dotted line in signal L of Fig. 7 may occur in spite of it that bundles are normal state. If these spaces are detected as defect input, an undesirable final output signal would be issued and the cigarette bundle concerned would be eliminated.

In order to overcome the inconvenience above, following measures may be taken.

First, the time, referred to herein as "dark time" showing the passing time of defective cigarette and the passing time of the spaces between cigarettes, is measured as defect input signal. Then the value of gate time to dark time is computed. The computed value is compared with a predetermined "judge value ratio" so as to judge whether or not there are defects or simply clearance spaces. The judge value is the dark time value at normal state of the cigarette bundle with clearance spaces.

If the gate times of the upper and lower step layers and the middle layer in the bucket $2b$ is $T_1$ and $T_2$ as shown by signals H and I in Fig. 7, and the dark times within the respective gate times are $t_1$, $t_2$ and $t_3$, and $t_4$, $t_5$ and $t_6$, respectively. The value $T_1$ or $T_2$ is divided by the total value of $t_1$, $t_2$ and $t_3$ or $t_4$, $t_5$ and $t_6$. If the divided value ratio is same or smaller than the judge value ratio, the cigarette bundle concerned is judged defective, while if the value is greater than the judge value, the bundle is normal.

The total value of clearance spaces generated between cigarette pieces is theoretically constant. According to experiments, however, the total value of the clearance spaces detected could be greater than the practical value since spaces while buckets are moving and stopping can be overlappingly counted. Therefore, the examination results obtained by the comparison between the judge value and the value obtained by dividing the gate time by total dark time, are sometimes unreliable for detecting defects.

On the basis of the problems of the trial example mentioned above, the applicant made the following experiments. That is, the applicant experimented with whether or not there would be a difference between dark time generated due to several spaces with regard to normal state cigarette bundle and that with regard to defective cigarette bundles. The result is that the maximum value of the dark time of defective bundles is always greater than that of normal state bundles.

Summary of the invention

The present invention is based upon the experimental results with regard to the maximum value of dark time. Therefore, it is an inherent object of the invention to provide a reliable checking apparatus wherein defects in cigarettes are assuredly detected on the basis of the correct value to be compared with judge value, and erroneous bundle ejection and/or conveying stopping is avoided.

In order to accomplish the object above and other objects, there is provided, according to the invention, a novel apparatus for checking defects in cigarette bundles comprising:

a dark time measuring device which is provided with photosensitive means facing a layer of cigarettes arranged in a section of a bucket fixed to a belt conveyor, said dark time being the time taken for defective cigarettes and spaces between neighbouring cigarettes in the layer to pass, and which dark time measuring device is for issuing a defect input signal, and a comparison device for comparing measured dark times with a preset dark time (such an apparatus is known from GB—A—2094129), characterised by a gate time measuring device (a) which is for measuring gate time which is the time taken for the internal length of the section of the bucket (2b) to pass a fixed point, and which gate time measuring device (a) is also for issuing a gate time signal; and

a computing device (c) for selecting the maximum value of dark time, for computing the ratio of the gate time to the maximum value of dark time and for issuing the computed ratio as a detection signal; and

in that the comparison device is a comparison and judge device (d) for comparing the computed ratio with a predetermined judge value so as to judge if there are defects in the cigarettes or in the number of cigarettes in the layer, and for issuing an output signal for eliminating the cigarette bundle concerned or a signal for stopping the bundle inserting and/or conveying operation.

Each of the devices constituting the apparatus are explained hereinafter. The number of cigarettes in any cigarette bundle may be 10 or 20. In the case where there are 10 cigarettes, they are layered 5 cigarettes in each of upper and lower layers. When 20 cigarettes comprise the bundle, 7, 6 and 7 cigarettes are layered in upper, middle and lower layers, respectively.

The apparatus is adapted to check each layer of each bundle simultaneously.

The internal length of the bucket is constant in the case where it holds 10 cigarettes. In the case where the bucket holds 20 cigarettes however, the upper and lower portions of the bucket have a length for 7 cigarettes, while the middle section is stopped and has a length to accommodate 6 cigarettes. As in the latter case, if the internal length is not uniform, the gate time measuring device should measure two gate times, one for longer sections and the other for shorter section, and the measuring device issues two gate signals.

The gate time measuring device is arranged to convert the measured value into an electric gate time signal. For this purpose, a rotary encoder is employed so as to detect the amount of rotation of the drive shaft of the bucket which corresponds to the distance moved by the bucket.

The dark time measuring device comprises pairs of photosensitive means for simultaneously sensing on the one hand the tip end of each cigarette and on the other hand the bottom end of each cigarette in bucket. The photosensitive means preferably comprises a light emitter for emitting modulated light via an oscillator so that the light may be unsusceptible to external light, and a light receiver consisting of photoelectric tubes for receiving the light from the emitter and to issue a modulated pulse output.

The computing device selects maximum value of the dark time and computes the ratio of the gate time to the maximum value of the dark time in the following manner.

The defect input signal for any layer of cigarettes, i.e. the measured amount of the dark time, is counted by the device on the basis of a reference time, and the maximum value of the dark time is selected by the comparison of counted numbers on the one hand. The gate signal which is put into the comparison device is counted on the basis of the reference time, and the counted number is put into the computing device and the counted number of the gate signal is divided by the counted number of the maximum value of the dark time on the other hand. In this way, measured ratio of the gate time to the maximum value of the dark time is computed.

The judge value ratio of the comparison and judge device is obtained by dividing the gate time by a preselected maximum value of dark time for a normal cigarette bundle and by multiplying the result value by an allowable percentage. The allowable percentage is of course a value less than 1.0.

The judging by the judge device is carried out in the following way. If the measured ratio computed by the computing device is X and the judge value ratio as A, then it is judged that the bundle is in normal state if there exists following formula:

$$A < X \qquad (1)$$

and it is judged that the bundle is defective if there exists following formula:

$$A \geqq X. \qquad (2)$$

The judge result given by the formulae (1) and (2) is reversed if the measured ratio and judge value ratio are obtained by dividing dark time by gate time.

According to the present invention, judging as to whether or not there are defects in cigarette bundles, is carried out by computing a ratio of gate time to measured maximum value of dark time, and by comparison the computed value ratio with a judge value ratio. Thus, according to the invention, the measured ratio to be compared to the judge value ratio is correctly obtained, and the defects in bundles are assuredly detected. Consequently, there is no such situation where normal state bundles are erroneously eliminated or a situation where the insertion of normal bundles or the conveying operation is erroneously stopped. In this way, the apparatus is reliable in detecting defects in cigarette bundles.

In order that the invention may be more clearly understood, preferred embodiments will be described, by way of example, with reference to the accompanying drawings.

Brief description of the drawings

Fig. 1 is a perspective view of a, partially removed, preferred embodiment of the checking apparatus according to the invention;

Fig. 2 is an enlarged sectional view of the embodiment taken along the line II—II of Fig. 1;

Fig. 3 is a circuit diagram;

Fig. 4 shows signal flows;

Fig. 5 represents wave forms produced by conventional photoelectric tubes;

Fig. 6 shows signal flows; and

Fig. 7 represents timing charts.

Detailed description of the preferred embodiment

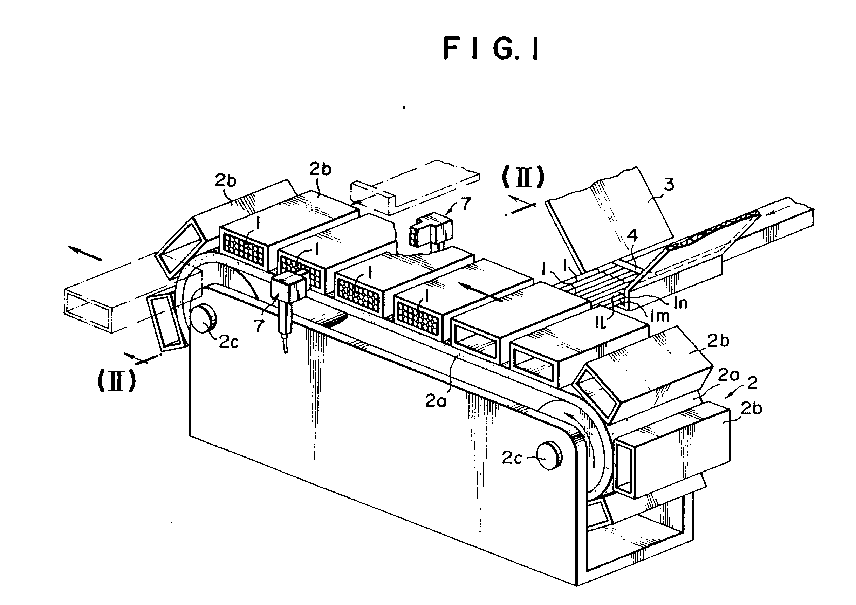

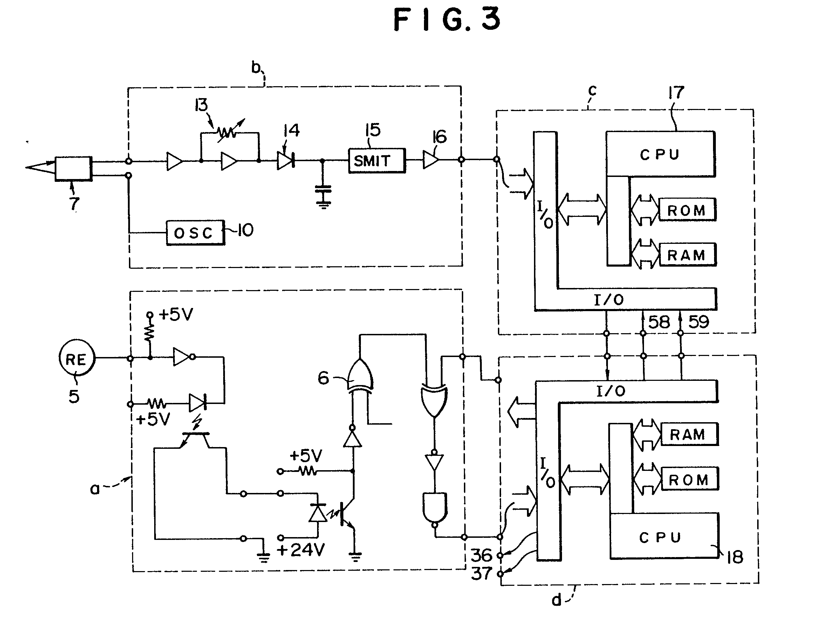

A preferred embodiment of the inspection apparatus of the invention is shown in Fig. 1 and 3. The apparatus inspects and checks for defects in cigarette bundles conveyed by a bucket conveyor 2, and is provided with a gate time measuring device $a$, a dark time measuring device $b$, a computing device $c$ and a comparison and judge device $d$ all shown in Fig. 3.

The bucket conveyor 2 consists of a belt 2a (or chain) and a number of spaced open ended box buckets 2b are mounted to the belt 2a. Cigarette bundles are inserted into and are housed in the buckets 2b, which are conveyed intermittently. Cigarettes 1 are inserted into the bucket 2b by a winding hopper 3 and a pusher 4.

That is, three layers of 7, 6 and 7 cigarettes respectively and thus 20 cigarettes in total, are placed in the lower, middle and upper steps $1_l$, $1_m$ and $1_n$ on the hopper 3. The layered cigarettes 3 are urged by the pusher 4 into the bucket 2b.

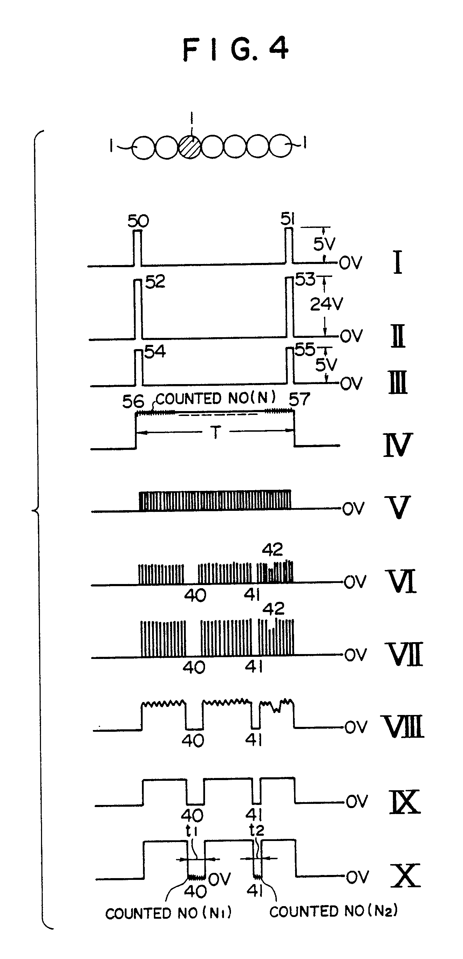

The gate time measuring device $a$ measures a gate time showing the passing time of the internal length sections of the bucket 2b and outputs gate time signals. The device $a$ is provided with a rotary encoder 5. The encoder 5 detects the amount of rotation of the drive shaft 2c of the bucket conveyor 2 corresponding to the movement of the bucket 2b, and converts the amount of rotation into an electric signal, i.e. the gate signal shown in I, II, III and IV of Fig. 4.

The gate signal output from the rotary encoder 5 is 5V, which is converted to 24V so as to be uneffected by noise. The output is finally converted to 5V, and is put into the comparison device $d$ via a signal data converter 6.

That is, when the gate time signal coincides with the set value put out from a memory of the comparison and judge device d, signals 50, 52, 54 and 56 at the initial state of the gate time signal are put into the comparison device $d$. Similarly, signals 51, 53, 55 and 57 at the end stage also are put into the comparison device d. Then the passing time from the start 56 to the end 57, i.e. the gate time T, is counted by the comparison device $d$ on the basis of or from the reference time $t_0$ and the result is stored. The counted number N is shown by a formula below:

$$N = T/t_0.$$

The gate time T includes long and short gate times. The counted number of each of the long and short gate times are sent to the computing device $c$ as signals 58 and 59, as shown in Fig. 3.

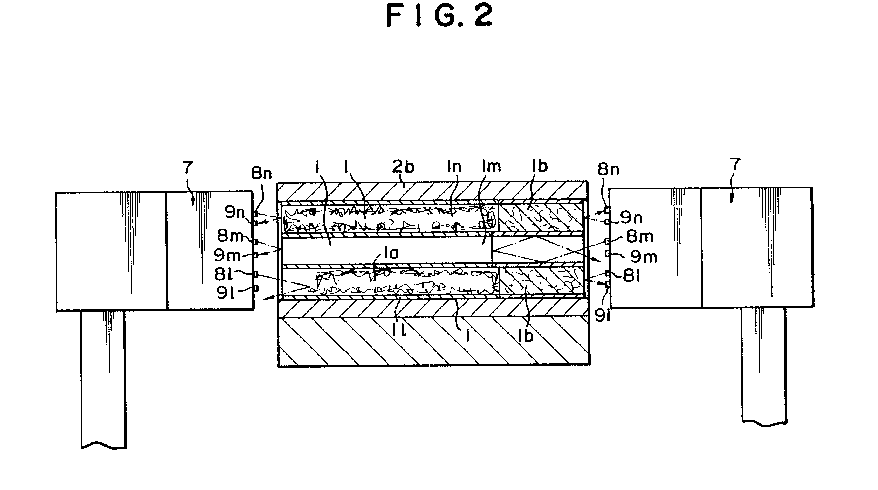

The dark time measuring device $b$ measures dark time which shows passimg time of defected parts of cigarettes 1 and of spaces between neighbouring cigarettes, and emits a defect input signal. The device is provided with a pair of photosensitive means 7. As is shown in Fig. 2, the means 7 is provided with light emitters $8_l$, $8_m$, $8_n$ and light receivers, i.e. photoelectric tubes $9_l$, $9_m$, $9_n$ each of which faces to layers $1_l$, $1_m$, $1_n$ respectively of cigarettes housed in buckets 2b.

Light emitted from emitters $8_l$, $8_m$, $8_n$ by virtue of a modulating oscillator 10 is modulated in order not to be dissolved by general external lights. When photoelectric tubes $9_l$, $9_m$, $9_n$ uniformly receive reflected light, they produce output modulated pulses as shown by V in Fig. 4.

If there is a defect in the cigarette bundle as shown by obliquely lined portion 17, top part of Fig. 4, the modulated pulse VI in Fig. 4 from photoelectric tubes appears. In this pulse mode, gaps 40, 41, 42 have been generated by cigarette defects or spaces.

The pulse mode VI is amplified by parallel-current amplifier 13 (Fig. 3) in a manner shown by VII in Fig. 4. The gaps 40, 41, 42 are smoothed by pulse smoothing device 14 as shown by VIII, and treated by wave former 15 so as to have such waves as shown in IX in Fig. 4. Then the wave signal is amplified as shown in X, and put into computing device $c$ via means 16. The signal issued from means 16 is a defect input signal, and 0 level time in this signal X means dark time $t_1$ and $t_2$.

The dark time $t_1$, $t_2$ is inspected and counted by the computing device $d$ on the basis of reference time $t_0$, and stored. In this instance, if there are two or more 0 level times, each of these times is counted independently and stored separately from each other in memory part. The counted number $N_1$ in dark times is shown in following formulae:

$$N_1 = t_1/t_0$$

$$N_2 = t_2/t_0.$$

The computing device $c$ selects the maximum value of dark time $t_1$, $t_2$ measured by the dark time computing device $b$ after comparison of counted numbers $N_1$, $N_2$, and divides the gate time T to the maximum value by the total of these counted numbers. The computed value ratio is put out as detection signal. The device $c$ is provided with a central processing unit 17.

The comparison and judge device $d$ compares the computed value ratio put out from the computing device $c$, to predetermined judge value ratio stored in memory, and judges the defectiveness of the cigarette bundles checked. As the result, it produces signal for eliminating defective bundles or for stopping the cigarette inserting and conveying operation. The device $d$ is provided with a central processing unit 18.

In the inspection apparatus mentioned above, inspecting steps for respective layers of cigarette bundles as shown in Fig. 4, are carried out in the following manner.

In the computing device $c$, $t_1$ is selected as the maximum dark time, and a ratio of gate time T to the maximum value $t_1$ is computed as ratio of counted numbers $N_1$ in respective time as follows:

$$N/N_1 = T/t_1 = X.$$

The ratio, i.e. the computed value X, is compared to judge value A by the comparison device $d$. If the comparison result is such that A<X, that is, if the value X is greater than A, the cigarette bundle is in normal state.

If the value X is smaller or equal to A, i.e. A≧X, it is judged that there is a shortage of tobacco or filter(s) missing. If tobacco shortage and filter missing are simultaneously occurred, it is judged that there is a shortage in number of cigarettes.

After the defected state is judged as above, elimination signal 36 or stop signal 37 is issued from the comparison device $d$, a mechanical operation for eliminating the bundle concerned or for stopping the movement of the bucket conveyor 2 and the pusher 4, is carried out.

It is further understood by those skilled in the art that the foregoing description is that of preferred embodiments of the disclosed detection and checking apparatus and that various changes and modifications may be made in the invention without departing from the scope thereof as defined by the appending claims.

## Claims

1. Apparatus for checking defects in cigarette bundles comprising a dark time measuring device which is provided with photosensitive means facing a layer of cigarettes arranged in a section of a bucket fixed to a belt conveyor, said dark time being the time taken for defective cigarettes and spaces between neighbouring cigarettes in the layer to pass, and which dark time measuring device is for issuing a defect input signal, and a comparison device for comparing measured dark times with a preset dark time, characterised by a gate time measuring device (a) which is for measuring gate time which is the time taken for the internal length of the section of the bucket (2b) to pass a fixed point, and which gate time measuring device (a) is also for issuing a gate time signal; and

a computing device (c) for selecting the maximum value of dark time, for computing a ratio of the gate time to the maximum value of dark time and for issuing the computed ratio as a detection signal and

in that the comparison device is a comparison and judge device (d) for comparing the computed ratio with a predetermined judge value so as to judge if there are defects in the cigarettes or in the number of cigarettes in the layer, and for issuing an output signal for eliminating the cigarette bundle concerned or a signal for stopping the bundle inserting and/or conveying operation.

2. An apparatus according to claim 1, wherein the bucket has internal length sections for housing 7 cigarettes in its upper and lower steps and 6 cigarettes in its middle step, and characterised in that the gate time measuring device measures long and short gate times in compliance with the difference in the internal length of said sections, so as to issue two kinds of gate signal.

3. An apparatus according to claim 1 or 2, characterised in that the gate time measuring device consists of a rotary encoder which detects an amount of rotation of a drive shaft of the bucket conveyor.

4. An apparatus according to any preceding claim, characterised in that the photosensitive means consists of an emitter for emitting modulated light via an oscillator, and of a light receiver consisting of photoelectric tubes for receiving the light and for issuing modulated pulses.

5. An apparatus according to claim 1, characterised in that the comparison device inputs the gate time signal, counts the signal on the basis of a reference time, and issues a count number to the computing device on the one hand, and the computing device counts the measured value of dark time on the basis of the reference time, selects maximum value of dark time by the comparison of the counted numbers, and computes a ratio of gate time to maximum value of dark time by dividing the counted number of said gate time signal by the counted number of the maximum value of the dark time signal, and wherein the judge value ratio of the comparison and judge device is the value obtained by dividing gate time by the preset maximum of dark time generated in normal cigarette bundles and by multiplying the divided value by an allowable percentage.

6. An apparatus according to claim 5, characterised in that if the counted number of the gate time is set as N, the counted number of maximum of dark time as $N_1$, and ratio computed by the computing device as X, the computed ratio X is represented by a formula:

$$X = N/N_1$$

and if the judge value ratio to be compared by the computed value X is set as A, then, it is judged that the bundle is in normal state if there exists following formula:

$$A < X$$

and it is judged that the bundle is defected if there exists following formula:

$$A \geqq X.$$

## Patentansprüche

1. Vorrichtung zur Überprüfung von Mängeln in Zigarettenbündeln, mit einer Dunkelzeit-Meßeinrichtung, welche mit einer Lichtmessungseinrichtung gegenüber einer Lage von Zigaretten ausgestattet ist, welche in einem Profilteil angeordnet ist, das auf einem Förderband befestigt ist, wobei die Dunkelzeit die Zeit ist, welche fehlerhafte Zigaretten und Leerräume zwischen benachbarten Zigaretten in der Lage zur Verbeibewegung benötigen, und wobei die Dunkelzeit-Meßeinrichtung zur Ausgabe eines Fehler-Eingangssignals verwendet wird; und einer Vergleichs-Vorrichtung zum Vergleich der gemessenen Dunkelzeiten mit einer vorgegebenen Dunkelzeit, gekennzeichnet durch

eine Gatterzeit-Meßeinrichtung (a), zur Messung der Gatterzeit, welche von der Innenbreite des Profilteils (2b) benötigt wird, um einen Fixpunkt zu passieren und wobei die Gatterzeit-Meßeinrichtung (1) weiterhin ein Gatterzeitsignal abgibt; und

eine Recheneinrichtung (c) zur Auswahl des Maximalwertes der Dunkelzeit, zur Berechnung eines Verhältnisses aus Gatterzeit und Maximalwert der Dunkelzeit und zur Abgabe des berechneten Verhältnis wertes als Erkennungssignal; wobei die Vergleichsvorrichtung eine Vergleichs- und Beurteilungs-Vorrichtung (d) ist, um das berechnete Verhältnis mit einem vorgegebenen Beurteilungssignal zu vergleichen und somit zu beurteilen, ob Mängel in den Zigaretten oder in einer Anzahl von Zigaretten in der Lage bestehen, und um ein Ausgangssignal zur Entfernung des entsprechenden Zigarettenbündles oder zum Abstoppen der Bündelung und/oder Weiterförderung abzugeben.

2. Vorrichtung nach Anspruch 1, wobie das Profilteil Innenbreitenabschnitte derart aufweist, daß die obere und die untere Lage jeweils sieben und die mittelere Lage sechs Zigaretten aufnehmen kann, dadurch gekennzeichnet,

daß die Gatterzeit-Meßeinrichtung lange und kurze Gatterzeiten entsprechend dem Unterschied in der Innenbreite der Abschnitte mißt, so daß zwei Arten von Gattersignalen abgegeben werden.

3. Vorrichtung nach Anspruch 1 oder 2, dadurch gekennzeichnet,

daß die Gatterzeit-Maßeinrichtung einen kodierten Drehgeber aufweist, der die Zahl der Umdrehungen einer Antriebswelle des Förderbandes erfaßt.

4. Vorrichtung nach einem der vorhergehenden Ansprüche, dadurch gekennzeichnet,

daß die Lichtmessungseinrichtung einen Emitter zur Abgabe modulierten Lichts über einen Oszillator und einen Lichtempfänger aufweist, der zur Lichtaufnahme Fotozellen besitzt und modulierte Impulse abgibt.

5. Vorrichtung nach Anspruch 1, gekennzeichnet dadurch,

daß die Vergleichsvorrichtung das Gattersignal aufnimmt, das Signal auf der Basis einer Referenzzeit zählt und einerseits einen Zählwert an die Recheneinrichtung abgibt, wobei die Recheneinrichtung den gemessenen Wert der Dunkelzeit auf der Basis der Referenzzeit zählt, den maximalen Wert der Dunkelzeit durch Vergleich der Zählwerte auswählt, und ein Verhältnis der Gatterzeit zu dem maximalen Wert der Dunkelzeit durch Dividieren des Zählwerts des Gatterzeitsignales durch den Zählwert des Maximalwertes des Dunkelzeitsignals bildet, und wobei das Verhältnis des Erkennungswerts der Vergleichs- und Beurteilungs-Vorrichtung der Wert ist, der durch Dividieren der Gatterzeit durch das vorgegebene Maximum der Dunkelzeit, die bei normalen Zigarettenbündeln entsteht, und durch Multiplizieren des Divisionswertes mit einem zugelassenen Prozentsatz gebildet wird.

6. Vorrichtung nach Anspruch 5, dadurch gekennzeichnet,

daß beim Setzen des Zählwertes der Gatterzeit auf N der Zählwert des Maximums der Dunkelzeit als $N_1$ und das Verhältnis, das von der Recheneinrichtung berechnet wird, als X gesetzt wird, dieses berechnete Verhältnis X durch dir Formel

$$X = N/N_1$$

ausgedrückt wird und wenn das Verhältnis des Erkennungswerts, das mit dem berechneten Wert X verglichen wird, gleich A gesetzt wird, wird bestimmt, daß das Bündel sich in einem normalen Zustand befindet, wenn folgender Zusammenhang besteht;

$$A < X$$

und es wird bestimmt, daß das Bündel defekt ist, wenn folgender Zusammenhang besteht:

$$A \geqq X.$$

## Revendications

1. Appareil pour la vérification de défauts dans des paquets de cigarettes comprenant un dispositif pour la mesure de la durée de défaut qui est muni de moyens photosensibles faisant face à une couche de cigarettes disposée dans une section d'un réceptacle fixé à un convoyeur à courroie, ladite durée de défaut étant la durée de passage de cigarettes défectueuses et des espaces entre des cigarettes adjacentes dans la couche, et lequel dispositif pour la mesure de la durée de défaut délivre un signal d'entrée de défaut, et un dispositif de comparaison pour comparer les durées de défaut mesurées avec une durée de défaut préétablie,

caractérisé par un dispositif pour la mesure de la durée de porte (a) qui est destiné à mesurer la durée de porte, qui est la durée de passage à un point fixé de la longueur interne de la section du réceptacle (2b), et lequel dispositif pour la mesure de la durée de porte (a) délivre aussi un signal de la durée de porte; et

—un calculateur (c) choisissant la valeur maximale de la durée de défaut, pour calculer un rapport de la durée de porte par rapport à la valeur maximale de la durée de défaut, et délivrant le rapport calculé sous forme d'un signal de détection; et

—en ce que le dispositif de comparaison est un dispositif de décision et de comparaison (d) pour comparer le rapport calculé avec une valeur de décision prédéterminée afin de décider si il y a des défauts dans les cigarettes ou dans le nombre de cigarettes dans la couche, et pour délivrer un signal de sortie pour éliminer le paquet de cigarettes concerné ou un signal pour arrêter l'opération d'insertion et/ou de transport du paquet.

2. Appareil selon la revendication 1 dans lequel le réceptacle a des sections de longueur interne pour loger 7 cigarettes à ses niveaux supérieur et inférieur, et 6 cigarettes à son niveau médian, caractérisé en ce que le dispositif pour la mesure de la durée de porte mesure des durées courtes et longues conformèment à la différence de la longueur interne desdites sections, afin de délivrer deux sortes de signaux de porte.

3. Appareil selon la revendication 1 ou 2, caractérisé en ce que le dispositif pour la mesure de la durée de porte comprend un codeur rotatif qui détecte une valeur de rotation d'un arbre d'entraînement du convoyeur de réceptacle.

4. Appareil selon l'une quelconque des revendications précédentes, caractérisé en ce que les moyens photosensibles sont constitués d'un émetteur émettant une lumière modulée via un oscillateur, et un récepteur de lumière constitué de tubes photoélectriques pour recevoir la lumière et pour délivrer des impulsions modulées.

5. Appareil selon la revendication 1, caractérisé en ce que le dispositif de comparaison entre le signal de la durée de porte, compte le signal sur la base d'un temps de référence, et délivre un nombre de comptage au calculateur d'une part, et le calculateur compte la valeur mesurée de la durée de défaut sur la base du temps de référence, choisit la valeur maximale de la durée de défaut par comparaison des nombres comptés, et calcule un rapport de la durée de porte à la valeur maximale de la durée de défaut en divisant le nombre compté dudit signal de la durée de porte par le nombre compté de la valeur maximale du signal de la durée de défaut, et dans lequel le rapport de valeur de décision du dispositif de comparaison et de décision est la valeur obtenue en divisant la durée de porte par le maximum préétabli de la durée de défaut engendrée dans des paquets de cigarettes normaux et en multipliant la valeur divisée par un pourcentage admissible.

6. Appareil selon la revendication 5, caractérisé en ce que si le nombre compté de la durée de porte est N, le nombre compté du maximum de la durée de défaut N1, et le rapport calculé par le calculateur X, le rapport calculé X est représenté par la formule:

$$X = N/N1$$

et, si le rapport de valeur de décision à comparer par la valeur calculée X est A, alors, on décide que le paquet est dans un état normal si il existe la relation suivante:

$$A < X$$

et on décide que le paquet est défectueux si la relation suivante existe:

$$A \geqq X.$$

# F I G. I

# F I G. 2

# FIG.3

0 136 092

# F I G. 4

0 136 092

# FIG. 5

(I)

VOLTAGE (V)

PHOTOELECTRIC
TUBE SIGNAL

TIME (t)

(II)

VOLTAGE (V)

PHOTOELECTRIC
TUBE SIGNAL

TIME (t)

(III)

VOLTAGE (V)

PHOTOELECTRIC
TUBE SIGNAL

TIME (t)

(IV)

VOLTAGE (V)

PHOTOELECTRIC
TUBE SIGNAL

TIME (t)

5

# FIG. 6

# FIG. 7